# EUROPEAN PATENT APPLICATION

(11) **EP 4 296 160 A1**
(43) Date of publication of application: **27.12.2023**
(21) Application number: 22756284.0
(22) Date of filing: 17.02.2022
(51) Int. Cl.: B64C 27/08, B64C 39/02, B64D 9/00, B64D 47/00

(54) **ROTARY MECHANISM, FLIGHT VEHICLE, AND DEVICE AND METHOD FOR CONTROLLING ATTITUDE OF LOAD**

(30) Priority: 17.02.2021 JP 2021023809; 04.03.2021 JP 2021034867; 04.03.2021 JP 2021034868; 08.08.2021 JP 2021130404; 09.11.2021 JP 2021182906; 28.11.2021 JP 2021192614
(71) Applicant: Mochizuki, Leona, Numazu-shi, Shizuoka 410-0822 (JP)
(72) Inventor: Mochizuki, Leona, Numazu-shi, Shizuoka 410-0822 (JP)
(74) Representative: JWP Patent & Trademark Attorneys
(86) International application number: PCT/JP2022/006505
(87) International publication number: WO 2022/176967

(57) **Abstract**

There is provided a mechanism and a device capable of increasing a degree of freedom of positioning of the center of rotation of a rotating body relative to a reference of rotation. Also, there is provided a system for using it to reduce an attitude change of a load due to an attitude change of a flying body. A rotation reference and a rotating body are connected with a rotating mechanism, provided with joints arranged so that: a link X and a link A are connected by a joint XA; a link A and a link B are connected by a joint AB; a link B and a link Y are connected by a joint BY; a link C is connected by a joint XC on the link X and a joint BC on the link B; a link D is connected by a joint AD on the link A and a joint DY on the link Y; a line connecting the joints XA and XC, and a line connecting the joints AB and BC are parallel; a line connecting the joints AB and AD, and a line connecting the joints BY and DY are parallel; a line connecting the joints XA and AB, and a line connecting the joints XC and BC are parallel; and a line connecting the joints AB and BY, and a line connecting the joints AD and DY are parallel, wherein the link X is connected to a rotation reference, or the link X is the rotation reference, and wherein the link Y is connected to a rotating body, or the link Y is the rotating body.

## Description

### FIELD OF THE INVENTION

The present invention relates to a rotating mechanism; a gimbal; control of a position and an attitude of a rotating body; and a flying body.

### BACKGROUND OF THE INVENTION

In recent years, development has been underway to realize shipment using flying bodies called drones. Many drones are configured with a computer for control, a battery, a sensor, and the like near the central part of their mechanical bodies. During flight, it is advantageous for movement of a mechanical body if heavy components are positioned near the central part of the mechanical body because it will reduce its inertial moment. Also, it is advantageous to position an acceleration sensor and the like in the center of a flying body for controlling and sensing purposes.

There are following problems and/or concerns related to when mounting a load to a flying body. By mounting a load to a flying body, its center of mass changes, thus negatively affecting a flying performance of the flying body. When the flying body changes its attitude, an attitude of the load connected to the flying body also changes. Since load weight and shape vary depending on the load, it is inefficient to use a flying body with a dedicated design for its center of mass. For this reason, a mechanism for cancelling the change of attitude of the load is needed.

There is a method for cancelling the attitude change of a load caused by an attitude change of a drone, by providing the drone with a gimbal mechanism and connecting the drone and the load via the gimbal mechanism. However, when a center of rotation of the gimbal mechanism does not coincide with a center of rotation of the attitude change of the drone, a force to rotate the drone is generated by the load weight, and in order to cancel that force, the drone needs to generate a force for changing its own attitude accordingly. In addition, since the flying body's attitude change alters the load position, control of the flying body becomes complex if the load position needs to be controlled.

### Prior Art Document

### Patent Documents

[Patent Document 1]
Japanese Unexamined Patent Application Publication No. 2019-059480

### SUMMARY OF THE INVENTION

In typical gimbals, a center of rotation of a gimbal is restricted to a physical rotation axis such as an output shaft of a motor, an axle, or a rotation, or their respective extended lines.

When applying a gimbal for a drone, in general, the center of rotation of the drone is often located within its airframe. Accordingly, in order to solve the above problem by aligning the center of rotation of a gimbal and the center of rotation of an attitude change of a drone, there is needed a special airframe having space in its center, allowing the provision of a gimbal mechanism in that space (Patent Document 1).

To this end, the present invention provides a mechanism and a device capable of increasing a degree of freedom of positioning of the center of rotation of a rotating body relative to a reference of rotation.

Also, in applications for a flying body, a mechanism is provided for controlling a position and an attitude of a load mounted on a flying body relative to a position and an attitude of the flying body by reducing a positional change of the center of mass and an attitude change of the load, and improving a flight efficiency and a stability.

With a link mechanism, a center of rotation of a rotating body, relative to a rotation reference, is set outside of mechanistic components.

A rotating mechanism with joints arranged so that:
a link X and a link A are connected by a joint XA;
a link A and a link B are connected by a joint AB;
a link B and a link Y are connected by a joint BY;
a link C is connected by a j oint XC on the link X and a joint BC on the link B;
a link D is connected by a joint AD on the link A and a joint DY on the link Y;
a line connecting the j oints XA and XC, and a line connecting the j oints AB and BC are parallel;
a line connecting the j oints AB and AD, and a line connecting the j oints BY and DY are parallel;
a line connecting the j oints XA and AB, and a line connecting the j oints XC and BC are parallel; and
a line connecting the joints AB and BY, and a line connecting the joints AD and DY are parallel,
wherein the link X is connected to a rotation reference, or the link X is the rotation reference, and
wherein the link Y is connected to a rotating body, or the link Y is the rotating body in this rotating mechanism.

A positional relationship, as in a link mechanism, of joints XA and XC, and the center of rotation 0 of the rotating body is the same as a positional relationship, as in a link mechanism, of joints AB, BC, and BY.

By using a parallel link mechanism, the center of rotation may be set as a point in the air.

The link X is connected to a flying body, or the link X is the flying body.

The link Y is connected to a load, or the link Y is the load.

One of the rotating mechanisms is referred to as a first rotating mechanism, and the other a second rotating mechanism, wherein respective components are referred to as a first link X, a second link X, etc.

A rotating mechanism may be defined by a first link Y connected to a second link X. Here, the first link Y may be regarded as the second link X. Also, a rotation axis of a first rotating mechanism and a rotation axis of a second rotating mechanism do not have the same direction.

A positional relationship, as in a link mechanism, of joints XA and XC of the first rotating mechanism, and the center of rotation 0 of the rotating body is the same as a positional relationship, as in a link mechanism, of joints AB, BC, and BY of the first rotating mechanism; and
a positional relationship, as in a link mechanism, of joints XA and XC of the second rotating mechanism, and the center of rotation 0 of the rotating body is the same as a positional relationship, as in a link mechanism, of joints AB, BC, and BY of the second rotating mechanism in this rotating mechanism.

The rotating body, the load may be rotatably connected relative to the link Y. For example, the rotating body may be rotatable about a rotation axis passing through the center of rotation 0 with the link Y as a reference.

With respect to the link X or the link Y, or both of the links X and Y, movement in the horizontal direction may be enabled.

An actuator may be provided so that the link Y may be rotated relative to the link X. By allowing to rotate any one of the joints, or tilt any one of the links, the link Y may be rotated relative to the link X by the rotating mechanism.

The link Y may be controlled so that it does not rotate relative to rotation of the link X. The link Y may be rotated so that it cancels the rotation of the link X.

A rotating mechanism, connected so that:
a link X and a link Au are connected by a joint XAu;
the link X and a link Cu are connected by a joint XCu;
the link X and a link E are connected by a joint XE;
a link B and the link Au are connected by a joint AuB;
the link B and the link Cu are connected by a joint BCu;
the link B and the link E are connected by a joint BE;
the link B and a link Ad are connected by a joint AdB;
the link B and a link Cd are connected by a joint BCd;
the link B and a link Y are connected by a joint BY;
a link D and the link Ad are connected by a joint AdD;
the link D and the link Cd are connected by a joint CdD; and
the link D and the link Y are connected by a joint DY,
wherein at least either pair of the link Au and the link Ad, or the link Cu and the link Cd are connected so that they rotate the same amount relative to the link B.

The link X is connected to a rotation reference, or the link X is the rotation reference, and
the link Y is connected to a rotating body, or the link Y is the rotating body in this rotating mechanism.
The rotating body and the rotation reference may be assigned vice versa.

The link X is connected to a flying body, or the link X is the flying body.

The link Y is connected to a load, or the link Y is the load.

Each of the j oints rotatably connects a corresponding connected link in at least two axial directions, and
the two axes of each joint are in a translationally moved positional relationship. The axes of the rotations as behaviors just need to form the translational relationship. For example, when two axes intersect, those axes may rotate in their outer product direction.

When viewed on a plane in which the axes of the two rotation axis directions of each joint orthogonally cross,
a line connecting the joint XAu and the joint AuB, a line connecting the joint XCu and the joint BCu, and a line connecting the joint XE and the joint BE are parallel, and distances between the corresponding joints are the same, and
a line connecting the joint AdB and the joint AdD, a line connecting the joint BCd and the joint CdD, and a line connecting the joint BY and the joint DY are parallel, and distances between the corresponding joints are the same.

When viewed on a plane in which the axes of the two rotation axis directions of each joint orthogonally cross,
the positional relationship between the joint AuB and the joint BY, and the positional relationship between the joint XAu and the center of rotation 0 are adapted to be the same. If rotation axes of the respective joints do not cross, the rotation axis of the center of rotation 0 do not cross either, and it will be a rotation axis which is a translationally moved rotation axis of a joint.

With a configuration in which an actuator or the like drives a rotation axis of any of the joints of each rotation axis of the rotating mechanism, or a force to rotate the rotating body is applied to any the links, the rotating mechanism may be actively rotated. It may be adapted to rotate passively without a driving force applied thereto.

It may be achieved to increase a degree of freedom of positioning of the center of rotation of a rotating body relative to a reference of rotation. In one example, the rotation axis of the rotating body relative to the rotation reference may be configured so that the rotation axis is not a physical one such as an output shaft of a motor, an axle, or a rotation. In another example, the center of rotation may be provided outside of an object constituting the rotating mechanism.

When applied to a flying body, the center of rotation of the rotating body may be positioned at a point inside of the flying body. Thus, even in a flying body incapable of incorporating an mechanism for rotating a load such as a gimbal or the like therein, the center of rotation of the load relative to the flying body may be aligned with the center of rotation of the flying body.

### BRIEF DESCRIPTION OF THE DRAWINGS

Fig. 1 is a configuration diagram of a rotating mechanism;
Fig. 2 is a form with a shifted center of rotation;
Fig. 3 is a configuration example of a dual-axis rotating mechanism;
Fig. 4 is a second configuration example of a dual-axis rotating mechanism;
Fig. 5 is an example of partly omitting the links;
Fig. 6 is an example of connecting one side with a bearing and/or a motor;
Fig. 7 is a first example of application to a flying body;
Fig. 8 is a second example of application to a flying body;
Fig. 9 is a third example of application to a flying body;
Fig. 10 is a configuration example of an attitude control system;
Fig. 11 is an example of application to a tailsitter drone;
Fig. 12 is an example of changing the link arrangement;
Fig. 13 is a variation example of the rotating mechanism;
Fig. 14 is a variation example of the links;
Fig. 15 is an attachment example in sideways;
Fig. 16 is an attachment example of a counterweight;
Fig. 17 is an example of connections to the flying body;
Fig. 18 is an application example;
Fig. 19 is a second application example;
Fig. 20 is another example of a link Y rotated in two axial directions;
Fig. 21 is yet another example of a link Y rotated in two axial directions; and
Fig. 22 is a configuration example with the link D eliminated.

### DETAILED DESCRIPTION OF THE INVENTION

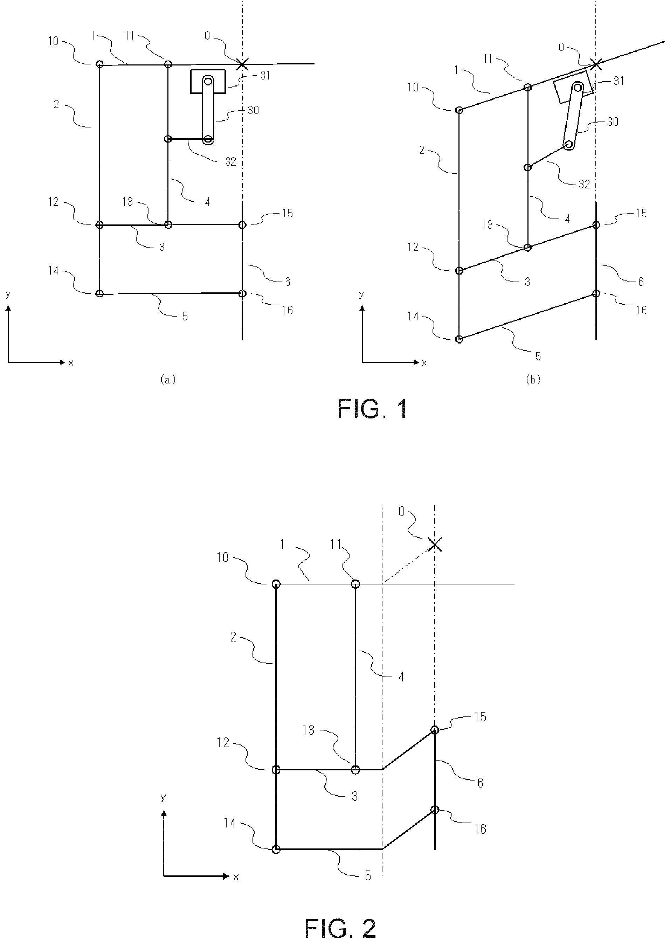

Fig. 1 shows a basic configuration of a rotating mechanism of the present application.

A link X1 and a link A2 are connected by a joint XA10;
a link A2 and a link B3 are connected by a joint AB12;
the link B3 and a link Y6 are connected by a joint BY15;
a link C4 is connected by a joint XC11 on the link X1 and a joint BC13 on the link B3; and
a link D5 is connected by a joint AD14 on the link A2 and a joint DY16 on the link Y6.

Here, the joints allow links connected via parallel rotation axes to rotate. They may be considered as so-called turning pairs.

A link mechanism has joints arranged so that:
when these joints are viewed on a plane perpendicular to the rotation axes of the joints,
a line connecting the joints XA10 and XC11, and a line connecting the joints AB12 and BC13 are parallel;
a line connecting the joints AB12 and AD14, and a line connecting the joints BY15 and DY16 are parallel;
a line connecting the joints XA10 and AB12, and a line connecting the joints XC11 and BC13 are parallel; and
a line connecting the joints AB12 and BY15, and a line connecting the joints AD14 and DY16 are parallel. Positions of the joints are equivalent in this link mechanism even when those positions change in a depth direction.

With such a configuration, the link Y6 is enable to rotate relative to the link X1 about a center of rotation 0. The link Y6 may be rotated about the center of rotation 0 without having to provide a component at the center of rotation 0 for rotating the joints and the like. Here, the rotation axis of the link Y6 is parallel to the rotation axis of the joints. Fig. 1 (a) and (b) show a rotation example. Note that, here, the link X is illustrated as rotating about the center of rotation 0 relative to the link Y.

The configuration of Fig. 1 is non-limiting, and any variation satisfying a positional condition of each joint may be possible. For example, the link D5 may be positioned above the link C4. Positions of the link A2 and the link C4 may be switched.

Also, when the joints are viewed on a plane perpendicular to the rotation axes of the joints, the position of the center of rotation 0 at this time is such that a positional relationship of the joints XA10 and XC11, and the center of rotation 0 is the same as a positional relationship of the joints AB12, BC13, and BY15. In other words, by designing the position of the joint BY15 relative to the joints AB12 and BC13, any position of the center of rotation 0 may be achieved.

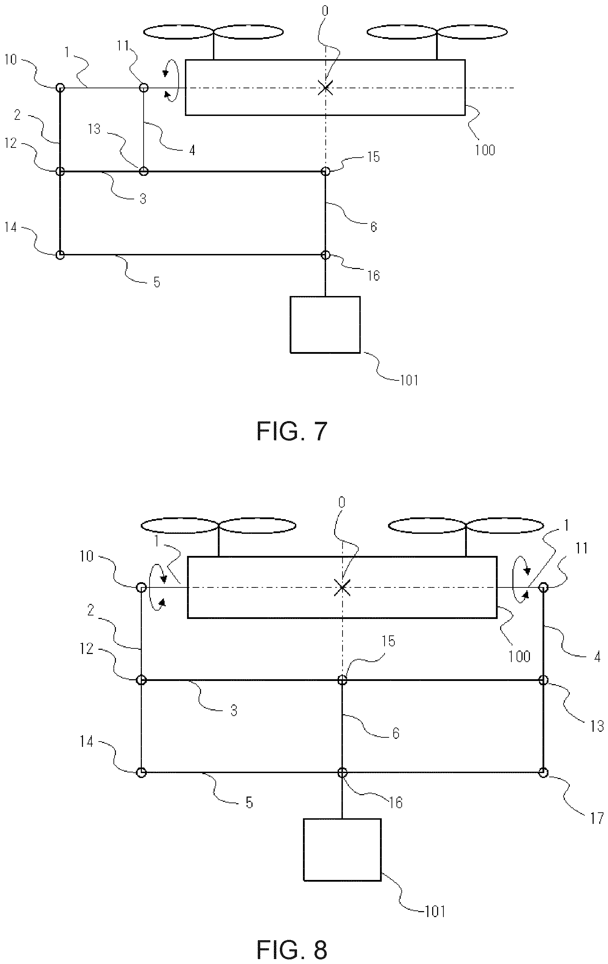

The link C4 and the link D5 may be connected by a joint CD17. In this case, the line connecting the joints AB12 and AD14, and a line connecting the joints BC13 and CD17 are made to be parallel. Thus, by adding an extra joint, improvement of a load bearing capacity may be expected. Also, a configuration as in Fig. 8 may have a left-right symmetry, which is advantageous for balancing and the like.

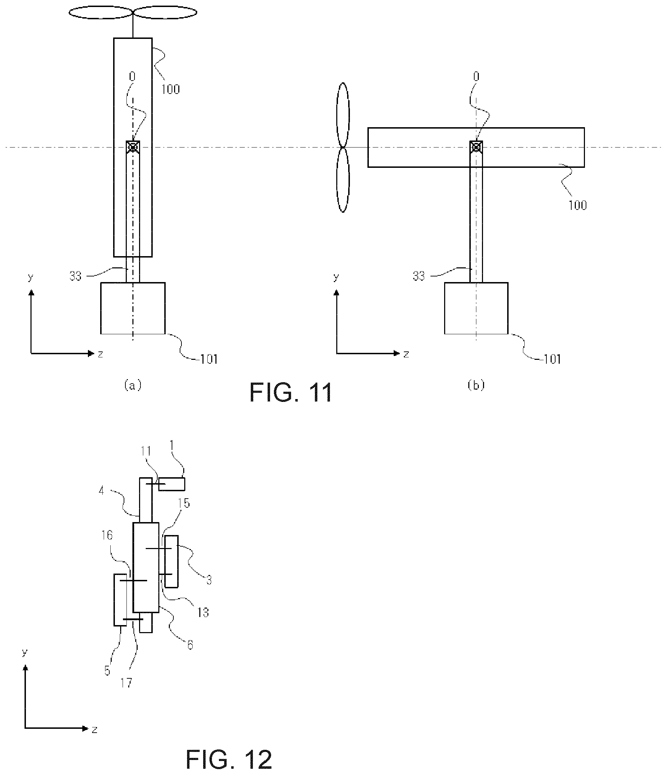

In order to prevent interference among links, the position of each link may be shifted in the depth direction and/or the rotational axis direction. In an example of Fig. 12, in order to prevent the interference between the link B3 and the link D5, they are positioned in the back and the front sides, respectively, sandwiching the link Y6. In this way, a wide movable range may be secured for the link B3 and the link D5, resulting in a large rotational range for the rotating mechanism. Also, this will allow size reduction of the rotating mechanism.

In Fig. 1, each link was configured as a straight line, but a link may take any shape as long as the positional relatiohships of the joints satisfy the abovementioned conditions. Therefore, in order to avoid interference among links, links may be bent for widening their movable ranges, or joints may be placed at different positions in the depth direction.

As in Fig. 2, by shifting the positions of the joint BY15 and the joint DY16, the position of the center of rotation 0 may be altered. Accordingly, for example, when connecting the link X1 onto a bottom surface of a flying body 100, the center of rotation 0 may be positioned above the bottom surface.

By making this rotating mechanism rotate about an another axis, the link Y6 may be rotated about two axes, i.e., the rotation axis of the rotating mechanism and a rotation axis for spinning the rotating mechanism. For instance, in Fig. 1, the link X1 is rotated about an axis parallel to the line connecting the joints XA10 and XC11. Here, by making this rotation axis for spinning the link X1 pass through the center of rotation 0, the link Y6 may be rotated about the center of rotation 0 in two directions. In example methods for connecting the link X1 and its rotation reference, connections are made by a motor, a bearing, or the like so that the link X1 may rotate about its axis of rotation relative to the rotation reference.

A rotating body may be provided so that the link Y6 may rotate about an axis parallel to the line connecting the joints BY15 and DY16. For example, the link Y6 and the rotating body will be rotatably connected to the axis parallel to the line connecting the joints BY15 and DY16 by a motor, a bearing, or the like.

The link Y6 and the rotating body may be connected through a gimbal. Here, a gimbal may be a common one, for example, used for preventing a camera from shaking and an ordinary one with its axis of rotation defined by a motor. In such a configuration, the rotating body may be controlled by the rotation reference attitude change so that the rotating body's position and attitude do not change, and further, the orientation and/or inclination of the rotating body itself may be changed without affecting the orientation and/or inclination of the rotation reference.

The rotating body may be connected so that it is capable of translational movement relative to the link Y6. By allowing the rotating body to translate relative to the link Y6, a vibration against the rotating body may be absorbed, and the position of the rotating body may be adjusted.

At least either one of the link Y6 and the rotating body, or the link X1 and the rotation reference may be connected via a vibration isolator member. An example of the vibration isolator member is rubber, damper, or the like.

By using two of the rotating mechanism, rotation may be controlled with two axes.

For the purposes of discussion, one of the rotating mechanisms is referred to as a first rotating mechanism, and the other a second rotating mechanism, wherein respective components are referred to as a first link X, a second link X, etc.

A rotating mechanism is defined by a first link Y connected to a second link X. Here, the first link Y may be regarded as the second link X. Also, a rotation axis of a first rotating mechanism and a rotation axis of a second rotating mechanism do not have the same direction. For example, rotation axes of the first rotating mechanism and the second rotating mechanism are orthogonal to each other.

Also, for each of the first and second rotating mechanisms, when their joints are viewed on a plane perpendicular to the rotation axes of the joints, by configuring these rotating mechanisms such that:
a positional relationship, as in a link mechanism, of joints XA and XC of the first rotating mechanism, and the center of rotation 0 of the rotating body is the same as a positional relationship, as in a link mechanism, of joints AB, BC, and BY of the first rotating mechanism; and
a positional relationship, as in a link mechanism, of joints XA and XC of the second rotating mechanism, and the center of rotation 0 of the rotating body is the same as a positional relationship, as in a link mechanism, of joints AB, BC, and BY of the second rotating mechanism, the rotation axes of the first rotating mechanism and the second rotating mechanism will pass through the center of rotation 0, and therefore, a second link Y may be rotated about the center of rotation 0 in two directions.

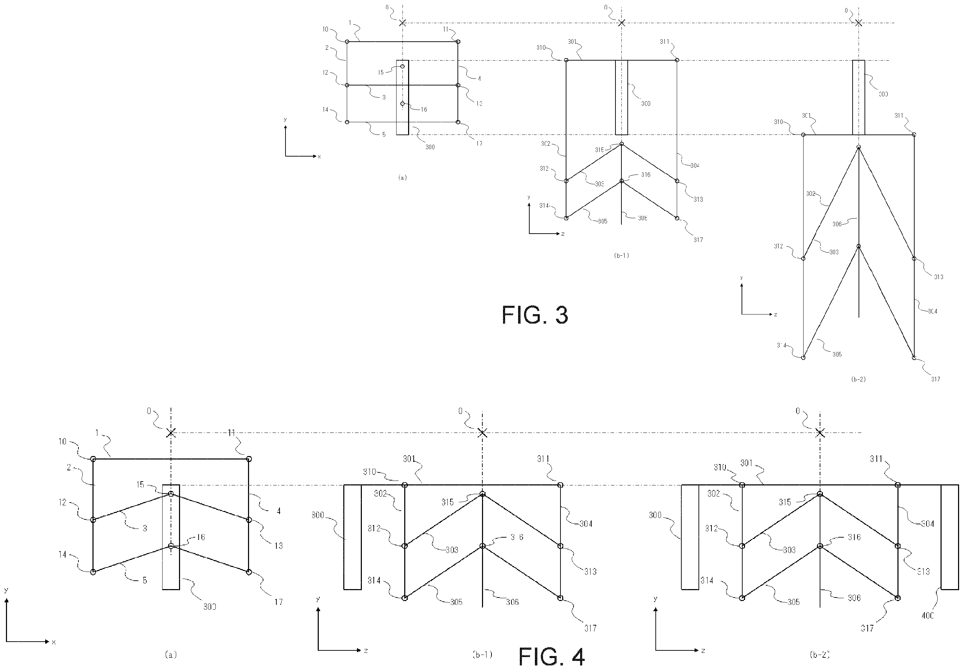

Fig. 3 shows an example of combining two rotating mechanisms.

FIG. 3 (a) illustrates links viewed from a direction of rotation axis of the first rotating mechanism (z-axis). Figs. 3 (b-1) and (b-2) illustrate links viewed from a direction of rotation axis of the second rotating mechanism (x-axis). As a connection example of the second axis of rotation, as in Fig. 3 (b-1), a second link X301 is connected above a fist link Y300. With the configuration providing the second link X301 in the upper portion, the second link X301 may become closer to the center of rotation 0, allowing the size reduction of this rotating mechanism.

Needless to say, as in Fig. 3 (b-2), the second link X301 may be connected below the first link Y300. However, in order to make the center of rotation of the second rotating mechanism the center of rotation 0, a vertical distance between a line connecting joints AB312 and BC313, and a joint BY need to be large, causing the size of this rotating mechanism to increase. The position of the second link X301 is not limited to this example, and may be attached at any position.

By orthogonalizing the first rotating mechanism and the second rotating mechanism, a second link Y306 may be rotated in two directions about the center of rotation, which is an intersection of the rotation axes of the first rotating mechanism and the second rotating mechanism. Thus, this rotating mechanism may have functionality equivalent to that of a dual-axis gimbal.

Fig. 4 shows another configuration example. In Fig. 4 (b-1), the first rotating mechanism is disposed next to the second rotating mechanism. Compared to the configuration of Fig. 3, for example, in order to prevent interference between a link B303 of the second rotating mechanism and the first rotating mechanism, there is no need to provide a large separation between joints XA301 and AB312 of the second rotating mechanism. Accordingly, the height and length of the rotating mechanism may be reduced. In Fig. 4, the second joint XA310 may be positioned even closer to the center of rotation 0. For instance, the connection position of the fist link Y300 and the second link X301 is further raised upward. In the example of Fig. 4, the fist link Y300 may be extended upward.

In Fig. 4 (b-2), a third rotating mechanism is further provided for rotating a link Y400 about the same axis of rotation as that of the first rotating mechanism, and the second rotating mechanism is supported by both sides. Compared to Fib. 4 (b-1), the number of connections increases, which is advantageous in terms of load bearing. Also, this configuration is left-right symmetric, making it advantageous for balancing. In Figs. 4 (b-1) and (b-2), components other than the link Y are omitted for the first and third rotating mechanisms.

The first rotating mechanism and the third rotating mechanism will be connected via the second rotating mechanism and both will rotate the same amount, but at least one pair of corresponding links of the first and third rotating mechanisms may be connected as one link. Any difference of amount of rotation between the links Y of the first and third rotating mechanisms is prevented, and forces applied to twist the second rotating mechanism are prevented.

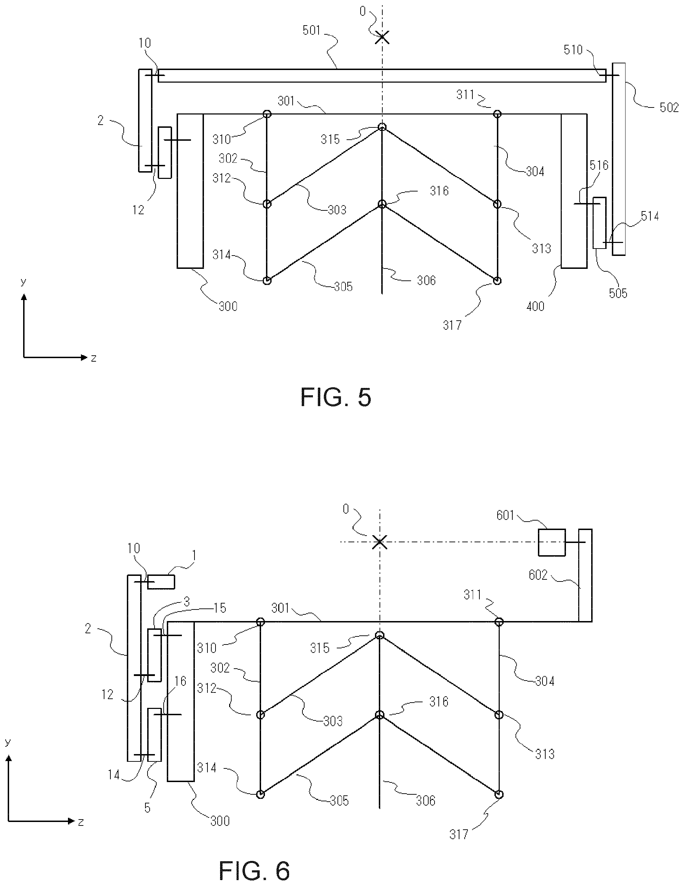

As in Fig. 5, some of the links of the first and third rotating mechanisms in Fig. 4 (b-2) may be omitted. For example, the first link B3 is omitted and instead, the link C4 is connected with the link D5 by the joint CD17 to omit a third link D. At this point, the joint CD17 and a line connecting the joints XA510 and AD514 are made to be parallel. Here, it may be considered that one rotating mechanism is constructed with the first and third rotating mechanisms.

As in Fig. 6, one side of a second link mechanism may be connected with a reference of rotation with a typical rotatable connecting method such as a motor or a bearing 601. At this time, the rotation axis is the same as the rotation axis of the first rotating mechanism.

As an example of a case where the rotating mechanism of the present application is applied to a flying body, a case where a multicopter-type drone is a flying body 100 and a load 101 is mounted on this drone is discussed by way of example. Here, the flying body is a rotation reference, and the load is a rotating body. The configuration described here is applicable to things other than the flying body 100 and the load 101.

The flying body 100 is considered as a common multirotor-type drone equipped with a flight controller 51, a receiver 52, motors, and propellers 53. When it flies autonomously, the receiver 52 may be omitted.

Fig. 7 shows an example of a flying body 100 equipped with a rotating mechanism. When a rotating mechanism of the present application is applied to an existing flying body, the rotating mechanism will connect to the bottom surface, side surface, upper portion or the like of the flying body. Fig. 7 is an example where a link X1 rotatably connects to a side surface of the flying body 100 in an x-axis direction. The rotating mechanism will rotate a link Y6 in a z-axis direction. The center of rotation of the flying body 100 is a point 0 inside the flying body 100.

As in Fig. 7, the rotation axis of the link X1 is connected to pass through the flying body's center of rotation 0. Thus, by rotating the link X1, rotation of the load 101 relative to the rotation in the x-axis direction of the flying body 100 may be cancelled. Each joint of Fig. 7 may rotate links connected in the z-axis direction. When viewed on an x-y plane of Fig. 7, joints BY15 and DY16 are arranged so that the joints BY15 and DY16 and the center of rotation 0 align on one straight line. Accordingly, rotation of the load relative to the rotation about the z-axis of the flying body 100 may be cancelled.

Fig. 8 shows another example of a flying body 100 equipped with rotating mechanisms. The link X1 is divided into a left side and a right side, and the flying body 100 is connected to the links X1 on both sides in this configuration. In this Fig. 8 example, the link X1 connected to a link A2 is connected on the left side of the flying body, and the link X1 connected to a link C4 is connected on the right side of the flying body. These two links X1 are rotatable coaxially in the x-axis direction.

Compared to the configuration of Fib. 7, the Fig. 8 configuration is advantageous in terms of load bearing because it has increased number of connections with the flying body. Also, this configuration is left-right symmetric, making it advantageous for balancing.

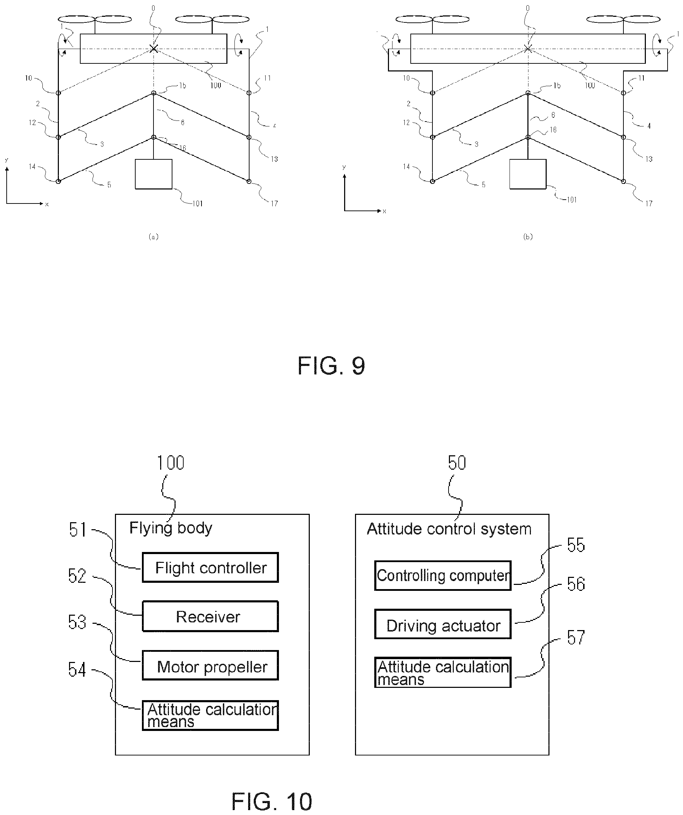

Fig. 9 shows another example of link X1 connection method. The links X1 are rotatably connected via an axis passing through the center of rotation 0. Here, joints XA10 and XC11 may be positioned at locations not on the rotation axis of the links X1. In this case, in order to set the center of rotation of the link Y6 to be the center of rotation 0, a positional relationship of the joints AB12, BC13, and BY15 is made to be the same as a positional relationship of the joints XA10 and XC11, and the center of rotation 0 when viewed on the x-y plane. Likewise, in the case of connecting on only one side as in Fig. 7, a similar configuration may be employed.

In Fig. 9, as in the configurations of (a) and (b), by changing the shapes of the links X1, different configuration sizes are applicable to the flying body 100. Thus, depending on the flying body 100 as a target of application, rotating mechanisms may be changed by switching only the links X1. Alternatively, by making lengths of the links X1 in the x-axis direction variable, this configuration may be attached to various sizes of flying body 100. By making the positions of the joints BY15 and DY16 variable, the position of the center of rotation 0 may be changed to improve the degree of freedom of application.

In Fig. 8 and Fig. 9, mainly the link A2 and the link C4 have different movable ranges. A flying body or the like may use the configuration of Fig. 8 or Fig. 9 in order to avoid blocking functions of components of the flying body.

The examples of Fig. 7, Fig. 8, and Fig. 9 illustrated forms where the load 101 was provided under the flying body 100, but the load 101 may be attached above the flying body 100 as well. In that case, the rotating mechanism may be attached in a upside-down configuration. Positioning the load 101 above the flying body 100 may be effective when, for example, a sensor is desirable above and close to the flying body such as when sensing is performed against a ceiling.

An example method for driving a rotating mechanism or rotating mechanisms will be discussed.

Any joint of respective rotating mechanisms may be driven by a motor or the like. Also, by providing any of the joints with a sensor for measuring a rotation amount and/or a rotation angle of the joint, a system for controlling the attitude of the rotating body may calculate the rotating body's attitude relative to its rotation reference. An example of the sensor is a rotary encoder, a potentiometer, or the like. When using a motor such as a servomotor as an actuator in such a way that it is rotated by a target angle, that target angle may be used as the rotation amount. The rotation amount may be calculated using the target amount.

With an arm drivable by an actuator, any link of the respective rotating mechanisms may be moved.

In a configuration having a plurality of rotation axes such as a configuration using a plurality of rotating mechanisms, by applying a force so as to move a link Y connected to a rotating body, or a rotating body, the motion of the rotating body will be a rotary motion about a center of rotation 0. If any of the links connected with the rotating body is drivable in two directions, the rotation of the rotating body may be controlled about the rotation axis 0.

An example configuration with a drive by an arm is shown in Fig. 1. An actuator 31 for driving an arm 30 is mounted on link X1, or the rotation reference, and the arm 30 is connected with the link C4 via a driving link 32. Needless to say, any component other than the link C4 may be driven.

When the rotation is in two axial directions, the actuator 31 may be positioned on the first link X1 or at the rotation reference by using a spherical pair, a turning and sliding pair, or the like for the connections of the arm 30, the driving link 32, and the link C4 to thereby accommodate positional changes in the rotation axis directions even when, for example, as in Fig. 3, one rotating mechanism is rotated by another rotating mechanism.

The amount of rotation of the link Y by the rotating mechanism may be obtained by providing a sensor for obtaining the rotation amount at a joint. Also, the rotation amount of the link Y relative to the arm rotation may be calculated. It is calculatable from the arm length, the rotation amount, and distance information among each joint.

As one example, when the center of rotation of the arm 30 is positioned on a line passing through the joints XA10 and XC11, and the driving link is made to be parallel with the XA10-XC11 line, the rotation amount of the arm is the same as the rotation amount of the link Y6, thereby reducing the calculation load.

There may be a configuration to change the length between joints of the driving link 32 in Fig. 1. The driving link 32 may be stretchable and/or the joint positions may be movable by a slider as well. In this case, the arm 30 may be fixed, or the arm 30 may be eliminated and instead the driving link 32 may be connected to the link X1.

An example of attitude control of a rotating body will be discussed.

An attitude control system 50 is controlled relative to an attitude change of the rotation reference so that a rotating body maintains a constant attitude. For example, in order to maintain a horizontal state of a load 101 against an inclinational change of a flying body 100, the load 101 is rotated relative to the flying body 100. Other than the horizontal control, the rotating body may be controlled so that it takes a target attitude of a given moment relative to a horizontal direction.

The attitude control system 50 may use various sensors to calculate the rotation reference, or the attitude of the rotating body. If the attitude of either the rotation reference or the rotating body may be calculated, the attitude of the other may be also calculated from the rotation amount by the rotating mechanism, and therefore, it is not necessarily required to provide an attitude calculation means for both of the rotation reference and the rotating body. In general, an attitude may be calculated by using an acceleration sensor and/or an angular velocity sensor, but the means for calculating the attitude is not limited by these sensors if the attitude control system 50 may obtain the attitude. There may be a configuration where the attitude control system 50 receives the attitude of the flying body 100 calculated by an attitude calculation means 54 provided on or in the flying body 100.

Similar to when a flying body 100 is wirelessly maneuvered, when the attitude of the rotation reference is controlled based on a target attitude and/or a target rotation velocity received by a receiver 52, the attitude control system 50 configured to be capable of obtaining the target attitude and/or the target rotation velocity of the receiver 52 will enable calculation of the attitude of the rotation reference. In particular, when the target attitude is received, an actuator for causing the rotating mechanism to rotate may be controlled so that the attitude of the rotation reference relative to the rotating body becomes the received target attitude.

Further, in the case of a flying body such as one in which the receiver 52 is connected to the flight controller 51, it is easy to connect a signal line to the attitude control system 50, and therefore, an end user may easily incorporate the attitude control system 50 in the flying body.

An example system configuration applied to a flying body 100 is shown in Fig. 10. The flying body 100 is equipped with a flight controller 51 for performing flight control and a receiver 52. The flight controller 51 may comprise one or more processors such as a programmable processor (e.g., central processing unit (CPU) ) and the like. It may be considered as a typical computer. Also, the flight controller 51 is provided with means 54 for calculating the attitude of the flying body 100. One example may have a common configuration including an acceleration sensor and/or a angular velocity sensor. The attitude calculation means 54 is capable of at least calculating the inclination of the flying body 100. The receiver 52 communicates to the flight controller 51 a signal from an operator for directing the inclination of the flying body 100. The flight controller 51 controls the rotation velocity of each propeller 53 based on the signal so that the attitude of the flying body will become its target attitude to thereby tilt the flying body 100 accordingly while it moves. When the flying body 100 is autonomously controlled, it may be configured so that a control device for autonomous control is connected in place of the receiver 52 and an instruction signal is communicated to the flight controller 51, or the flight controller 51 may be provided with autonomous control functionality.

The attitude control system 50 is equipped with a controlling computer 55, an attitude calculation means 57, and an actuator 56 for causing rotation by a rotating mechanism. The controlling computer 55 may comprise one or more processors such as a programmable processor (e.g., central processing unit (CPU) ) and the like. It may be considered as a typical computer. Also, the controlling computer 55 may be considered as a part of the flight controller 51, and the function to control the attitude of the load 10 may be incorporated in the flight controller 51. The attitude calculation means 57 of the attitude control system 50 may at least calculate the inclination of the load 101. One example may have a common configuration including an acceleration sensor and/or a angular velocity sensor. Further, the attitude calculation means 54 of the flying body 100 may be used, and the attitude control system 50 may be configured to receive the sensor information and/or the inclination information that the attitude calculation means 54 of the flying body 100 outputs. Alternatively, the signal or inclination information that the flight controller 51 received from the attitude calculation means 54, or the inclination information that the flight controller 51 calculated may be communicated to the attitude control system 50. The attitude control system 50 may calculate the attitude of the load 101 from the attitude information of the flying body 100 and the rotation amount of the load 101 rotated by the rotating mechanism.

The driving actuator 56 is provided with functionality to drive to a target angle and/or position. When the attitude calculation means 54 of the flying body 100 is used, the attitude of the load 101 relative to the flying body 100 may be calculated from an drive amount of each actuator, hence, based on this information, the attitude of the load 101 may be calculated. The controlling computer 55 of the attitude control system 50 controls the drive amount of the driving actuator based on the inclination of the load 101 received from the attitude calculation means 57 so that the inclination is maintained constantly, for example, so that the inclination of the load 101 is maintained horizontally.

The attitude control system 50 may obtain information on a speed of the inclination change, that is, an angular velocity of the flying body 100, and change the drive speed of the driving actuator.

Also, delay in the rotational control of the rotating body relative to the attitude change of the flying body may be reduced by obtaining target attitude information of the flying body 100 and/or future attitude information of the flying body from the flight controller 51, the receiver 52, and/or the computer for controlling the autonomous control of the flying body 100. For the attitude control of the rotating body using the above information, a feedforward control may be added.

The attitude control of the load 101 relative to the flying body 100 may employ control methods used for common gimbals. In case of a control with which a camera attached to a gimbal is maintained horizontally by driving a motor with the axis of the motor as the rotation axis, an actuator for driving the rotating mechanism of the present application may be used in place of the motor.

Examples applying configuration examples of Fig. 7, Fig. 8, or Fig. 9 to cases where the airframe inclination significantly changes between when hovering and traveling as in tailsitter-type flying bodies.

As shown in an example of Fig. 11, when the flying body 100 changes its attitude during its flight by 90° about the center of rotation 0 in the x-axis direction, the rotating mechanism of the present application rotatably connects to the flying body 100 in the x-axis direction to thereby enable the control to maintain the load 101 horizontally relative to the attitude of the flying body during both hovering (a) and traveling (b).

The lengths between the joints XA10-AB12 and between the joints XC11-BC13 may be configured to be changeable during the flight. In the Fig. 11 example, during flight, the distance between the bottom surface and the link B3 of the flying body 100 becomes too long, and shortening that distance may reduce the overall size in flight.

Each joint position of the rotating mechanism may be configured to be changeable. In one example, the link lengths between the respective joints are changeable. In an example of variable-length configuration, link joints are positioned on a slider capable of locking movements. In another example, part of a link may be configured to be threaded, and depending on the position on the thread, an interval between joints may be adjusted. This may be considered that the respective corresponding joints are connected with an external screw thread and an internal screw thread so that the distances between respective joints are changeable.

A plurality of joint position candidates may be prepared and optimally selected as to which ones are to used during their connection to the rotation reference depending on the size of the rotation reference and/or the position of the center of rotation 0 to thereby assemble the rotating mechanism. For example, in each link a plurality of holes are created in advance to be used as joints, wherein the holes to be used will be selected depending on the size of the flying body and/or the position of the center of rotation 0, and links will be rotatably connected with screws, rivets, and the like at their respective corresponding holes as their respective center of rotation.

In particular, by making the position of joint BY relative to joint AB and the position of joint DY relative to joint AD changeable, the position of the center of rotation 0 of the rotating mechanism becomes changeable, thereby making the rotating mechanism applicable to various flying bodies. It will also be possible to switch flying bodies.

The orientation of the load 100 may be made changeable relative to the link Y. For example, the link Y and the load 101 are connected via a typical gimbal. In such a configuration, the load movement may be controlled by the flying body movement, and the load orientation may be controlled by the gimbal.

In example applications to a camera mounted on a flying body such as multicopter-type one, the attitude change of the camera by rotation about two axes caused by the airframe attitude change may be cancelled using the rotating mechanism of the present application; the change of photographing direction about the rotation axis in the gravitational direction may be achieved by changing the flying body orientation by flight; and the change in up and down photographing direction may be accommodated by a rotation axis connecting the link Y and the camera. When the camera is horizontal, the axial rotation of the photographing direction is not necessary because the camera does not need to be tilted about the rotation axis in the photographing direction in a typical photographing, and because the camera is maintained horizontally by rotating mechanism of the present application. Therefore, in order to change the photographing direction of the camera, just one actuator may be added to make the link Y and a corresponding connection axis of the camera rotatable so as to make at least the photographing direction rotatable in the up-down direction.

Further, the load 101 and the link Y may be connected with a vibration-insulatable member and/or device. Alternatively, the link X and the flying body 100 may be connected with a vibration-insulatable member and/or device.

The rotating mechanism of the present application may have all of its joints configured with turning pairs, and therefore, this rotating mechanism is advantageous in terms of load bearing compared to, for example, configurations using spherical pairs such as ball joints. Moreover, this configuration may be constructed relatively easily.

As for the rotating mechanism of the present application, compared to common gimbals, an object to rotate such as a camera, and a flying body, i.e., a rotation reference in the present application do not need to be positioned within a gimbal, allowing a size reduction of the overall size.

The configuration of the rotating mechanism and/or each rotation axis do not need to be driven by a motor, an actuator, or the like. In this case, a force pulling the flying body by the weight and/or swinging movement of the load to rotate the flying body is cancelled by passive rotation of the rotating mechanism and/or the rotation axis.

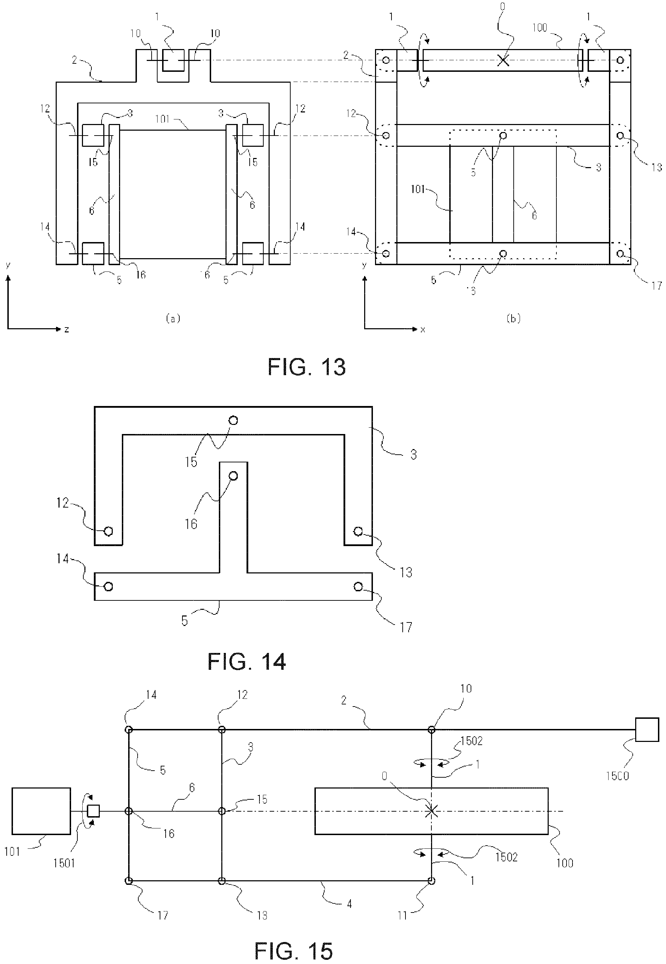

Examples of the link shape variation will be discussed. In the form of Fig. 8, the rotating body may be configured to be sandwiched by two links Y. Fig. 13 shows another configuration example. This shape is configured in such a way that the shapes of a link A2 and a link C4 respectively branch into two directions, and those branches connect with a link B3, a link D5, and a link Y6, respectively, which are doubled. In the Fig. 13 example, a view from the link A2 side is illustrated as a representative configuration. The shapes of the branched links do not need to be the same, but those links need to be configured to have the same center of rotation.

Connections with a rotating body may be configured to connect the link Y and the rotating body, or directly connect with the rotating body via joints BY and DY. The link Y may be separated into a joint Y side and a joint DY side, and each link Y may connect to the rotating body. When the rotating body is directly connected by the joints, or when the link Y is separated and connected with the rotating body, a range that the links Y hide the rotating body is small, and therefore, if, for example, the rotating body is a camera, it is prevented that those links hinder the photographing.

With such a configuration, the rotating body may be positioned closely with a connection surface of the rotating mechanism to thereby allow its size reduction. The present variation example is applicable in other rotating mechanisms illustrated in the present application. In particular, by applying this variation to the second rotating mechanism of Fig. 4, Fig. 5, and/or Fig. 6, an attachment position or attachment positions of the rotating body may be set close to an attachment surface of the rotating mechanism and/or the bottom surface of the flying body.

One example of a link shape for widening its movable range is shown. As shown in Fig. 14, one of the link B and the link D which is closer to the link X is configured to have a shape having space underneath, and the other, more distant link is configured to have a shape for limiting the occupied amount of the space. According to such a configuration, link interference may be reduced and the movable range of the rotating mechanism may be expanded. Also, a distance between a joint AB and a joint AD may be reduced to thereby enable size reduction of the rotating mechanism.

Shapes of the link B and the link D may be such as a link D5 in Fig. 14, and this link D5 may be shaped so that it extends an arm upward from the center of the link, wherein that extended part may have candidates of joints BY15 and DY16, for example, a plurality of holes and the like. Thus, a user may change the positions of the joints BY15 and DY16 relative to the joints AB 12 and AD14, allowing to adjust the position of the center of rotation 0 according to each application.

An example of the rotating mechanism of the present application attached sideways is shown in Fig. 15. The Fig. 15 example was configured to connect the link X at the upper and lower portions of the flying body, but the rotating mechanism may be attached to the side surface of the airframe. At this time, the rotating mechanism, shown in Fig. 9, Fig. 3, and/or the like, may be adopted. A rotation axis may be further added for rotating the rotating body using a rotation axis other than the one or ones by the rotating mechanism. For example, the rotating body and/or the flying body will be connected with the rotating mechanism via a rotation axis drivable by a motor or the like. When cancelling the flying body inclination, the rotating mechanism and the rotating body 101 are connected via a rotation axis 1501. When it is desired to change the horizontal orientation relative to the flying body 100, a rotation axis 1502 may be drivably provided.

At least one of the link A and the link C may be provided with a counterweight. In the example of Fig. 15, the link A is equipped with a counterweight 1500. It may be distributed and also positioned on the link C. By balancing the rotational moment with the counterweight 1500 at the load 101 and the rotation axis 0, it is possible to reduce the force required to rotate the load 101 or maintain its attitude by the rotating mechanism. The counterweight 1500 may be part of the components utilized of the flying body 100 and/or the load 101. For example, a battery of the flying body 100, a fuel storage section in case of an engine-type flying body, and/or a computer may be used. In particular, batteries are suited for the use because batteries in typical flying bodies are configured to be removable, and they are relatively heavy. As for the positioning of the counterweight 1500, based on the principle of leverage, placing it away from the center of rotation allows balancing with a heavier load 101. By lengthening the link A, making the link A changeable, or configuring the position of the counterweight 1500 changeable, for example, preparing a plurality of connection position candidates for the counterweight 1500, a load 101 of various weight may be accommodated. The weight of the counterweight 1500 may be changed as well.

In one example of how to determine the position of the counterweight 1500, when the counterweight is provided on the link A, the moment around the joint XA by the gravitational force on the counterweight 1500 should be balanced with the moment around the center of rotation 0 by the gravitational force on the load 101. Here, the moment by a force by the weight of the rotating mechanism and the like may be considered for calculation.

The rotating mechanism and the load 101 may be rotatable about the rotation axis 1501. With this rotation axis 1501 being perpendicular to the rotation axis of the rotating mechanism, an inclination change in the direction of the other rotation axis of the flying body may be cancelled. Also, the rotating mechanism and the flying body 100 may be rotatable about the rotation axis 1502.

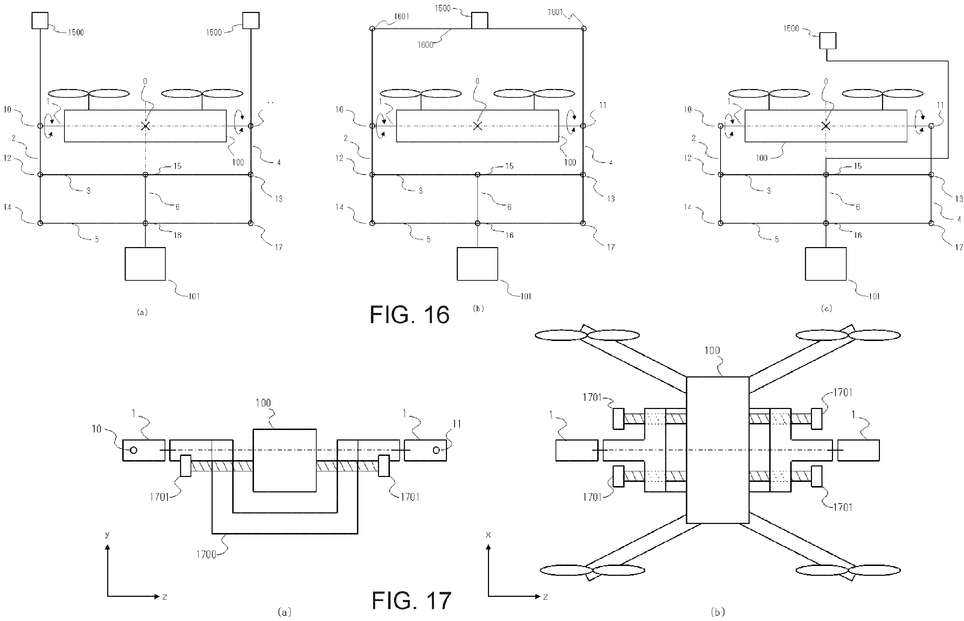

Similarly, in the example of Fig. 8, the counterweight 1500 may be provided. Fig. 16 shows arrangement examples. In the example of (a), counterweights 1500 are provided over both of the link A2 and the link C4. By positioning them on the left and right sides, it may be prevented to lose a balance. In the example of (b), joints 1601 are added above the link A2 and the link C4, a link 1600 is connected, and a counterweight 1500 is provided on the link 1600. Since the number of the counterweight is only one, this configuration is applicable even when there is only one battery or the like. As in the case of (c), the link Y6 may be extended upward to position a counterweight 1500 at the end. In Fig. 16, the load 101 was illustrated as positioned in the lower portion, but when it is positioned in the upper portion, the counterweight 1500 may be positioned in the lower portion. Further, when the load 101 is positioned in the upper and lower portions, if at least one of the link A and the link C is common in the upper and lower portions, or if the upper and lower portions are connected so that thier rotations are mechanically the same, a counterweight may be provided on either one of the loads 101 to make a balance.

Attachment of the rotating mechanism of the present application to a flying body will be exemplified. As in an example of Fig. 17 (a: front, b: top), a connection 1700 for connecting to the flying body is provided. The connection 1700 of this example sandwiches a fuselage of the flying body 100 to be fixed to the flying body 100. The connection 1700 and the fuselage of the flying body 100 may be fixed by screws 1701. The screws may be fixed by providing threaded holes in the fuselage of the flying body 100, or the screws may simply sandwich the fuselage of the flying body 100. At this time, anti-slip rubber and the like may be provided so as to secure the screws and/or the fuselage. The center of rotation of the flying body 100 and the center of rotation of the rotating mechanism may be aligned by making the fixing position of the fuselage adjustable. In that case, a spacer may be used. The fixing method is not limited by the usage of screws. The connection 1700 and links X1 on the left and right are rotatably connected by the same rotation axis, and at least one of them connects to an actuator such as a motor or the like in a rotationally drivable manner. The connection 1700 may be configured so that it mounts on the flying body in a covering manner. Needless to say, it may be connected to the bottom surface of the airframe.

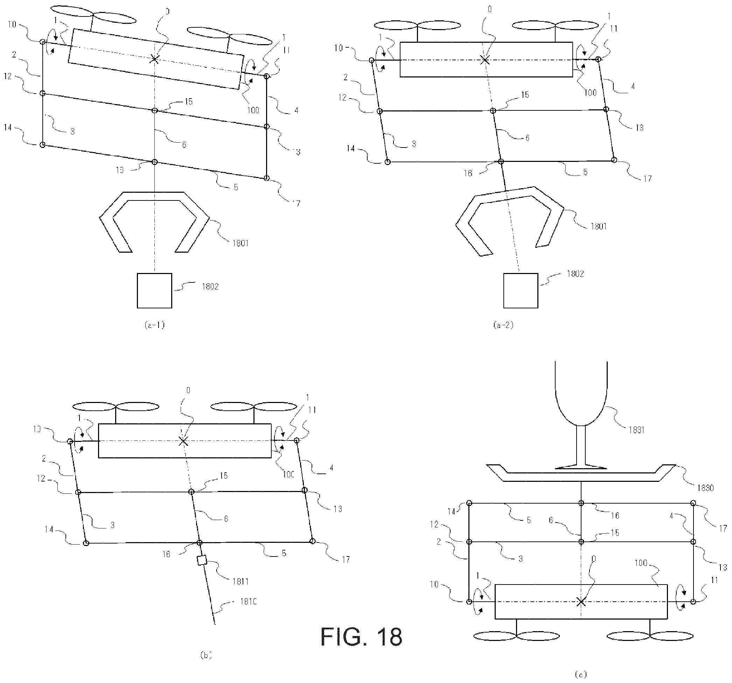

Fig. 18 shows some application examples. By making the rotating body to be a configuration 1801 for grasping, adhering to, and sucking objects, such as a gripper, a robot hand, or the like, the flying body may pick up an object. For example, operations such as grasping and transporting an object and/or grasping a door knob and open the door will be possible. By connecting a gripper 1801 or the like with the flying body 100 using the rotating mechanism of the present application, it becomes controllable to reduce the positional change of the gripper 1801 relative to the attitude change of the flying body 100, enabling to advantageously facilitate positioning for grasping and/or placing an object. The attitude of the gripper 1801 or the like may be controlled so as to maintain a predetermined attitude such as a horizontal one (Fig. 18 (a-1)), and/or be oriented toward an object of grasping 1802 and/or a target position (Fig. 18 (a-2)). When a user operates the flying body to pick up an object by a control to maintain a constant gripper attitude, or by a control to orient the gripper toward the object, since the user may perform the operation without having to consider the positional change of the gripper part due to the attitude change of the flying body, the operation of the flying body will become easier. Needless to say, the rotating mechanism may take forms other than ones illustrated herein; for example, as in Fig. 3, Fig. 4, and Fig. 5.

The rotating body may be a crane and/or a winch. It may be considered to connect wire, a string, and/or a chain to the link Y. Fig. 18 (b) shows an example. By rotating the link Y6 with the rotating mechanism of the present application, swinging of a wire 1810 or the like may be controlled. When using the rotating mechanism of the present application, if the wire 1810 or the like is pulled, its orientation may be made to pass through the center of the flying body. For example, when tension is applied to the wire 1810, its rectilinear extended line passes through the center of the flying body as the center of rotation 0 of the rotating mechanism. With such a configuration and a control, a force to rotate the flying body by the tension pulling the wire or the like may be prevented. The control may be performed such that the orientation from the center of rotation 0 of the rotating mechanism to a connection point 1811 of the wire or the like of the link Y or an unreeling point 1811 of the winch or the like will be the same as the direction of pulling of the link Y by the wire or the like. When a winch is used, the unreeling position of the wire or the like needs to be on the link Y, and a reeling device of the winch may be positioned on the flying body side. The winch may be configured to be on a hanging load side. The wire or string 1810 may be a feeder cable of the flying body.

The rotating body may be configured to be capable of mounting and transporting an object thereon with, for example, a pedestal, a plate, or the like. Fig. 18 (c) shows an example. A plate or pedestal 1830 is connected via the rotating mechanism above the flying body 100. With such a configuration, for example, a user may cause the flying body to carry a transported object 1831 such as food and drink and/or luggage placed on the pedestal 1830. Since the pedestal 1830 may be maintained horizontal or tilted so as to cancel an inertial force, for example, a drink may be transported without being spilled. By positioning the pedestal 1830 above the flying body 100, it may be operated to fly at a low position when the transported object is loaded or unloaded in person, thereby allowing to reduce a damage when the flying body 100 crashes. Also, compared to when the pedestal 1830 is positioned beneath the flying body 100, there is no component of the flying body 100, the rotating mechanism, and the like above the pedestal 1830, and therefore, there is nothing getting in the way of the user placing the object 1831 on the pedestal 1830 and/or taking the object 1831 from the pedestal 1830. Also, there is no size/spatial limitation for the transported object 1831 such as limitation on its height. In the configuration of this example, a propelling device of the flying body 100 such as propellers may be positioned below the flying body 100. Thus, interference by the pedestal 1830 and/or the rotating mechanism may be prevented. Moreover, propeller guards and the like may be provided for reducing a damage upon contacting with a person. A hole or holes may be provided in the pedestal or plate 1830, or the pedestal or plate 1830 may be mesh-like. By not impeding an air flow, its impact on the flight is reduced.

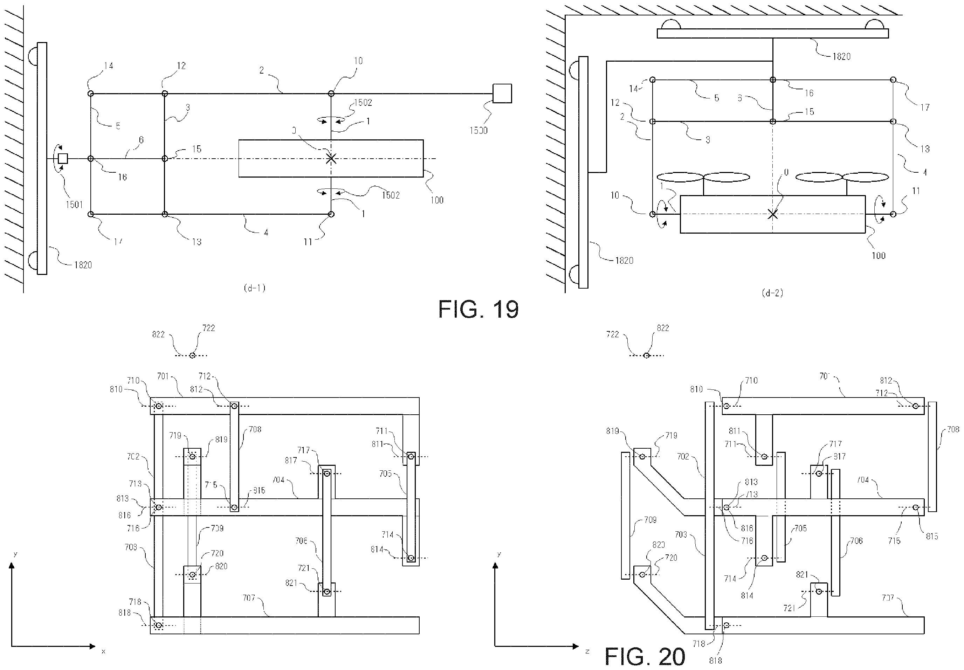

A device such as wheels and/or tires, or a slick material or the like for running on ceiling and/or wall surfaces in a stroking manner may be connected, via the rotating mechanism of the present application, to the flying body upwardly, sideways, or both. Fig. 19 (d-1, d-2) show examples. While the flying body 100 flies and pushes contact parts such as the wheels and/or the slick material against a ceiling surface and the like, a running device 1820 may run on the ceiling and/or wall surfaces. At this time, by making the center of rotation of the running device 1820 relative to flying body 100 the same as the center of rotation of the flying body using the rotating mechanism of the present application, a pressure distribution applied over the plurality of contact parts may be made constant. Also, when the running device 1820 is running or moving, changing the inclination of the flying body 100 may prevent any of the contact parts from losing contact with the respective contact surface. This allows, for example, reduction of a measurement error at a sensor provided on the running device 1820. Utilization in a wall surface inspection in a tunnel or the like, and/or an inspection of columns or under surfaces of a bridge may be expected. For example, the running device 1820 will be equipped with a hammer test equipment and/or a camera.

Another example of a link Y rotated in two axial directions will be discussed.

A link X701 and a link Au702 are connected by a joint XAu (710 and 810);
a link X701 and a link Cu705 are connected by a joint XCu (711 and 811);
a link X701 and a link E708 are connected by a joint XE (712 and 812);
a link B704 and a link Au702 are connected by a joint AuB (713 and 813);
a link B704 and a link Au702 are connected by a joint BCu (717 and 817);
a link B704 and a link E708 are connected by a joint BE (715 and 815);
a link B704 and a link Ad703 are connected by a joint AdB (716 and 816);
a link B704 and a link Cd706 are connected by a joint BCd (717 and 817);
a link B704 and a link Y709 are connected by a joint BY (719 and 819);
a link D707 and a link Ad703 are connected by a joint AdD (718 and 818);
a link D707 and a link Cd706 are connected by a joint CdD (721 and 821); and
a link D707 and a link Y709 are connected by a joint DY (720 and 820),
wherein at least either pair of the link Au702 and the link Ad703, or the link Cu705 and the link Cd706 are connected so that they rotate the same amount relative to the link B704 in this rotating mechanism.

The link X701 is connected to a rotation reference, or the link X is the rotation reference, and
the link Y709 is connected to a rotating body, or the link Y is the rotating body in this rotating mechanism.

The rotating body and the rotation reference may be assigned vice versa.

The link X701 is connected to a flying body, or the link X is the flying body.
The link Y709 is connected to a load, or the link Y is the load.

Each of the joints rotatably connects the corresponding connected link in at least two axial directions, and
the two axes of each joint are in a translationally moved positional relationship. The axes of the rotations as behaviors just need to form the translational relationship. For example, when two axes intersect, those axes may rotate in their outer product direction. In another example, when a plurality of axes may be possible, representative two axes need to satisfy the translational relationship.

When viewed on a plane in which the axes of the two rotation axis directions of each joint orthogonally cross,
a line connecting the joint XAu (710, 810) and the joint AuB (713, 813), a line connecting the joint XCu (711, 811) and the joint BCu (714, 814), and a line connecting the joint XE (712, 812) and the joint BE (715, 815) are parallel, and distances between the corresponding joints are the same; and
a line connecting the joint AdB (716, 816) and the joint AdD (718, 818), a line connecting the joint BCd (717, 817) and the joint CdD (721, 821), and a line connecting the joint BY (719, 819) and the joint DY (720, 820) are parallel, and distances between the corresponding joints are the same.

When viewed on a plane in which the axes of the two rotation axis directions of each joint orthogonally cross,
the positional relationship between the joint AuB (713, 813) and the joint BY (719, 819), and the positional relationship between the joint XAu (710, 810) and the center of rotation 0 (722, 822) are adapted to be the same. If rotation axes of the respective joints do not cross, the rotation axis of the center of rotation 0 do not cross either, and it will be a rotation axis which is a translationally moved rotation axis of a joint.

With a configuration in which an actuator or the like drives a rotation axis of any of the joints of each rotation axis of the rotating mechanism, or a force to rotate the rotating body is applied to any the links, the rotating mechanism may be actively rotated. It may adapted to rotate passively without a driving force applied thereto.

If the joint arrangement conditions are met, each link may take any shape. For example, a bent shape may be possible to avoid blocking the link movements. Also, a link and/or a joint may be added to avoid blocking the movement of the rotating mechanism. For example, an additional link equivalent to the link A may be added to a position different from the original link A position. This additional link will satisfy the same condition as those on the arrangement and/or joints of the original link A. Similarly, the link C and/or the link E may be added. By adding the links and/or joints, improvement of the load carrying capacity and/or rigidity of the rotating mechanism may be expected.

Fig. 20 shows an embodiment example. This embodiment example illustrates an example where the link Y is rotated in two axial directions. The shape and/or arrangement of the link do not restrict joint and/or axis arrangements, and any modification may be added. For example, the link shapes may be altered so that the movable range of the links may expand.

In the example of Fig. 20, the link Au702 and the link Ad703 are made as one link, and the joint AuB (713 and 813) and the joint AdB (716 and 816) are made as one joint. Accordingly, the link Au702 and the link Ad703 rotate by the same amount relative to the link B704.

In the example of Fig. 20, when viewed on the x-y plane, the rotation axis of each joint is parallel to the z-axis. When viewed on the y-z plane, the rotation axis of each joint is parallel to the x-axis. In the example of Fig. 20, rotation axes of the z-axis and the x-axis of each joint are adapted to cross, but these rotation axes may be configured not to cross, and, for example, all rotation axes of in the z-axis direction may be shifted upward by 1 cm. At this time, the center of rotation 0z722 of the rotating mechanism is also shifted upward by 1 cm, and 0z722 and 0x822 do not cross. The orientational relationships of the rotation axes of the joints in the z-axis and x-axis directions must not be the same, but they are preferably perpendicular or close to perpendicular.

In the example of Fig. 20, when viewed on the x-y plane and the y-z plane, on each plane, the line connecting the joint XAu (710, 810) and the joint AuB (713, 813) is parallel with the line connecting the joint AuB (713, 813), that is, the joint AdB (716, 816) and the joint AdD (718, 818), but they do not need to be parallel on at least either one of the planes.

In the example of Fig. 20, when viewed the rotation axes of the joints in the z-axis direction, distances between the joints XAu710 and AuB713, between the joints XE712 and BE715, and between the joints XCu711 and BCu714 are the same, and the respective lines connecting them are parallel; and
distances between the joints AdB716 (the same as AuB713) and AdD718, between the joints BY719 and DY720, and between the joints BCd717 and CdD721 are the same, and the respective lines connecting them are parallel.

The joint rotation axes viewed from the x-axis direction are similar to the rotation axes viewed from the z-axis direction.

For the simplicity of description, here, the reference numbers of the corresponding joints in different axial directions have numbers shifted by 100, in such a way that the rotation axis XAu710 in the z-axis direction corresponds with the rotation axis XAu810 in the x-axis direction.

When viewed from the z-axis direction, the z-axis rotation axis 0z722 of the center of rotation 0 of the rotating mechanism is such that the direction and the distance from the joint XAuz710 to the center of rotation 0z722 is the same as the direction and the distance from the joint AuBz713 to the joint BYz719; and when viewed from the x-axis direction, the x-axis rotation axis 0x822 of the center of rotation 0 of the rotating mechanism is such that the direction and the distance from the joint XAux810 to the center of rotation 0x822 is the same as the direction and the distance from the joint AuBx813 to the joint BYx819. The center of rotation 0 of the rotating mechanism may be configurable by the direction and the distance from the joint AuB to the joint BY.

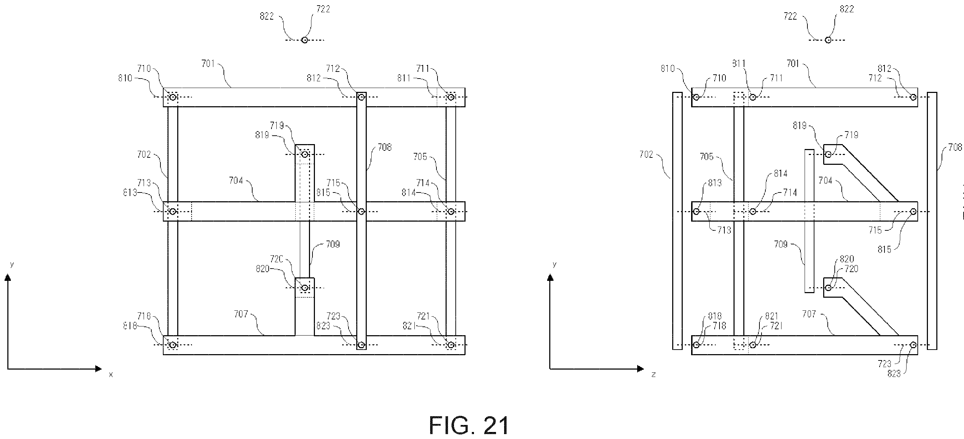

Fig. 21 shows a modified example of the rotating mechanism of Fig. 20. In the example of Fig. 21, a link Au and a link Ad are made as one link Au702. Also, a link Cu and a link Cd are made as one link Cd706. Also, a link E708 and a link D707 are connected via a joint DE (723, 823).

Thus, by making at least one pair of the links Au and Ad, and the links Cu and Cd as one link, the number of parts and joints may be reduced. Similar to the joint DE of Fig. 21, by adding a joint, improvement of the load bearing capacity and/or approximation of the rotating mechanism to a point-symmetrical shape may be expected.

In the examples of Fig. 21 and Fig. 20, when each joint position is made as an intersection of two axes, or a representative point in such a way that a position relative to two axes is respectively the same, positions of the joints XAu (710, 810), XCu (711, 811), and XE (712, 812) provided on the link X701 form a triangle. The link Y709 of Fig. 20 is located outside of the above triangle, but it may be positioned inside of the triangle as illustrated in Fig. 21.

As another example of rotating the link Y in two axial directions, the single-axis rotating mechanism, shown in Fig. 1, Fig. 2, and the like, may be modified as follows. Joint rotation axes are added so that the link X, the link B, and the link D may rotate in yet another axial direction, respectively, relative to the links connected to each of the link X, the link B, and the link D, wherein those rotation axes do not coincide with the rotation axes before adding the new rotation axes, that is, the preexisting rotation axes of each joint. Also, the joint connecting the link Y, the link B, and the link D is made rotatable in still another single-axis direction. Further, a link E is provided for connecting with the link X as well as at least one of the link B and the link D. By the link E pulling and pushing at least one of the link B and the link D by the rotation of the link X, the link B, D will be rotatable in the direction of the added rotation axis. As for the attitude of the added link E, by connecting the link E via a j oint or joints so as to stay parallel to the link A, the rotation of the link B, D relative to the link X will be the same for the added rotation axis as well. Thus, for the rotation of the added rotation axis, the link Y may be operated in a similar manner to that before adding the rotation axis.

In the example of Fig. 1, in order for the link X, the link B, and the link D to be able to rotate in, for example, the x-axis direction, a rotation axis is added so that all joints are capable of rotating in the x-axis direction as well. Also, the link X and the link B are connected via the link E.

The joint connecting the link E is desirably provided at a position different from the z-axis position of other joints.

Also, if any of the link E, the link B, and the link D is not connected, it is desired that the link B or D which is not connected with the link E, the link Y, and a joint connecting the link A and the link C are not positioned on a straight line when viewed sterically.

In the dual-axis rotating mechanism, the arm, the wire, or the pedestal for transportation, as shown in Fig. 18, may be provided as a rotating body. Further, any of the links may be provided with a counterweight to thereby reduce the torque during active rotation, and/or enable the adjustment of the default position when no torque is applied.

A variation example of the rotating mechanism will be shown below. In this example, the link D is eliminated. The joints which used to connect to the link D may also be eliminated. Here, as for the position of the link Y in terms of the position of the joint BY, it is rotatably connected about the center of rotation 0, and the attitude of the link Y will be rotatable about the joint BY independent of the rotation of the center of rotation 0. This variation is applicable to rotating mechanisms such as ones illustrated in Fig. 1 and Fig. 2. The examples, as in Fig. 3, Fig. 4, Fig. 5, and Fig. 6, where the first rotating mechanism is connected to the second rotating mechanism may be applicable by eliminating the link D of the second rotating mechanism. The forms, as in Fig. 15 and Fig. 16, provided with the counterweight 1500 are also applicable.

A basic configuration of the present variation example is as below.

A link mechanism has joints arranged so that:
a link X1 and a link A2 are connected by a joint XA10;
a link A2 and a link B3 are connected by a joint AB12;
the link B3 and a link Y6 are connected by a joint BY15; and
a link C4 is connected by a joint XC11 on the link X1 and a joint BC13 on the link B3,
wherein when these joints are viewed on a plane perpendicular to the rotation axes of the joints, a line connecting the joints XA10 and XC11, and a line connecting the joints AB12 and BC13 are parallel; and
a line connecting the joints XA10 and AB 12, and a line connecting the joints XC11 and BC 13 are parallel.

The joint BY15 is positioned so that the line connecting the center of rotation 0 and the joint BY15, and the line connecting the joints XA10 and AB12 are parallel.

In the example applied to a flying body, particularly as in Fig. 18 (b), when a wire or the like is connected to the flying body, since the pulling force by the wire passes the center of rotation 0, or near the center of rotation 0, the attitude change of the airframe due to the pulling may be reduced. Moreover, compared to the case of Fig. 18 (b), the configuration may be simplified since there is no link D5. Similarly, when applied to the forms of Fig. 20 and Fig. 21, the link D707 may be eliminated in the forms. Here, joints and/or links which used to be connected to the link D5 may be also eliminated. For example, the link Ad702, the link Cd706, and joints connecting them may be eliminated.

When rotated in two axes, as in Fig. 8, the link X1 may be made rotatable, or at least the joint XA10 and the joint XC11 may be made rotatable in another axial direction.

In a configuration example with the link D eliminated, at least one of the link A, the link C, and the link Y may use a flexible material. For example, it may be a string, a thread, wire, and/or a chain. Further, in such a case, joints connecting links made of the flexible material may be eliminated. This may be considered as those links connected by a joint becoming directly connected. The flexible material will serve as a joint. With the link Y being pulled against the link X, the link A and the link C made of the flexible material are pulled to thereby serve as a rotating mechanism. In the examples applied to the forms of Fig. 20 and Fig. 21, the flexible material may be similarly used for the link E.

When the link A and the link C are made of the flexible material, the sum of their lengths may be shorter than the length between the connection points of these two links connecting with the link X. Thus, intertwining of the link A and the link C may be prevented. The respective lengths of the link A and the link C may be shorter than the length between the connection points of these two links connecting with the link X.

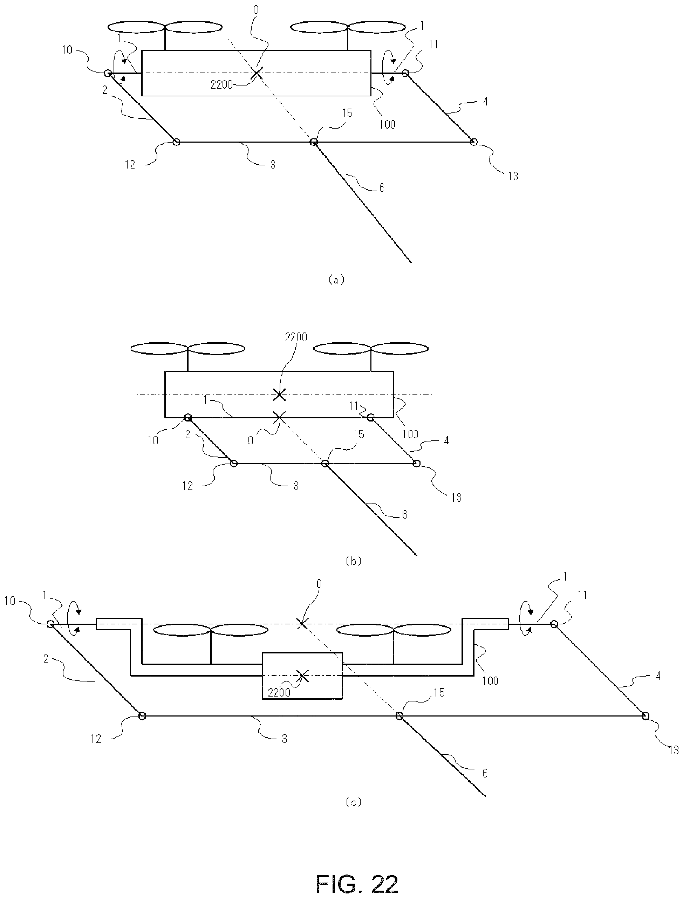

An example applied to a flying body will be shown. An example where a wire or the like is connected to the flying body is shown in Fig. 22. This may be regarded as a configuration in which the link D5, the joint AD 14, the joint DY16, and the joint CD17 are eliminated from the example of Fig. 8. Here, the link Y6 is wire, a rope, a string, or the like. The end of the rope may be connected to a hanging load, or may be connected to the ground and/or a winch to thereby limit a flight range of the flying body. At least one of the joints may be made actively rotatable with an actuator or the like to thereby control the swing of the link Y6.

In Fig. 22 (a), the center of rotation 2200 of the rotating body 1 and the center of rotation 0 of the rotating mechanism are made to coincide. In the example applied to a flying body, since the direction of the tension by the rope's pulling is oriented towards the center of rotation 2200 of the rotating body, the attitude change of the airframe due to the pulling may be reduced. Also, regardless of the pulling, the flying body may take any attitude.

In Fig. 22 (a), the center of rotation 0 of the rotating mechanism is provided at a lower position than the center of rotation 2200 of the rotating body 1. In the example of Fig. 22 (a), the flying body is regarded as the link X1, and the joints XA10 and XC11 make the links A2 and C4 rotatable, respectively, in the depth direction as well. In the example applied to a flying body, the rotating mechanism may be attached on the bottom surface of the flying body. This may prevent the rope or the like from being caught in the propellers. The center of rotation 0 will be provided at a lower position than the center of rotation 2200 of the rotating body, but it is desired that the center of rotation 0 and the center of rotation 2200 are positioned closely.

In Fig. 22 (a), the center of rotation 0 of the rotating mechanism is provided at a higher position than the center of rotation 2200 of the rotating body 1. When the rope or the like, which will serve as the link Y6, is pulled, its tension generates a force to cause the flying body, which is the rotating body 1, to rotate in such a way that it tilts in the pulled direction. In a configuration for fixing the flying body, flying toward the inclination direction of the airframe, at a constant point using a rope or the like, the flying body is pulled by the rope or the like, and therefore, tilts toward the pulling direction. As a result, the flying body flies toward the direction to loosen the rope or the like. In the case of a multirotor-type flying body, with a connection to the outer side of the propeller guard, the center of rotation 0 of the rotating mechanism may be provided at a high position.

The link A2 and the link C4 may be constructed with a rope and/or a string. In this case, the joints XA10, XC11, AB12, and BC13 may be omitted. The flying body, which will serve as the link X1, and the link B3 need to be connected with two ropes, two strings, or the like so that they form a parallelogram, and further, the link B3 needs to be connected with the link Y6. When the link Y6 is made of a rope or a string, the joint BY15 may be omitted. Since the rope or string and the link may be simply tied together, a rodlike object, which will serve as the link B3, and two strings or ropes can simply construct the configuration. When the link Y6 is a string or a rope, the link B3 should be tied with the string or the rope, which will serve as the link Y. If the link Y6 do not need to be rotated strictly about the center of rotation 0, the connections do not need to form a parallelogram as described previously, but only need to form a quadrangle. Needless to say, a shape closer to a parallelogram is more desirable.

In a configuration example with the link D eliminated, at least the links A2 and C4 need to be rotatable in at least two directions. The joints XA10 XC11 may rotate in two axial directions, or, as in the Fig. 8 example, the link X1 may be connected in another axial direction. When the rotating mechanism is passively rotated, it may rotate in three axial directions. In other words, as discussed above, it may be connected with a flexible material, or connected via a triaxial joint.

Other than a rope or the like, an electrical wire for power supply and/or a communication cable may be used. By reeling the wire, the rope, or the like, the flying body may be collected, and the attitude change of the airframe due to the tension caused by the reeling may be reduced. The flight efficiency may be improved, and the risk of crash caused by the reeling may be mitigated. It may be taken advantage of in the case of a flying body towing a load. Further, the part of the rope or the like may be provided with a damper, a spring, and/or an elastic body. Thus, it may prevent a sudden force applied to the flying body such as when a tension is applied to a slack rope.

A tethering wire and a flying body may be connected via the present rotating mechanism. At this time, any of the rotating mechanisms discussed above may be used.

The movable range of each joint may be restricted. For example, as for the flying body, in order to prevent the links from colliding with a driving part of a propeller or the like, the rotational range of the rotating mechanism may be restricted. A stopper for restricting the movable range of the link may be provided.

In applications to a multirotor-type drone, oftentimes its arm parts connecting its main body and rotors are easy to use for the connections.

The rotating mechanism may be provided on the load side. When a load is hung by a rope or the like, the attitude of the load may be controlled against the rope swing. For example, the control is to maintain a horizontal state.

The rotating mechanism of the present application is not limited to the above-shown application examples, but may be utilized for other rotations of an object. For example, it may be used for rotation to change a tire orientation during steering By assuming the rotation reference as the tire, and the rotating body as a vehicle main body side, even without providing in the tire a member and/or a structure to serve as a rotation axis for steering, a rotation axis of the tire concerning the steering may be provided inside the tire, that is, on a tire tread surface. Here, the link X may be considered as the tire, and the link Y as the vehicle body. Alternatively, they may be assigned vice versa.

The above-described embodiments are for illustrative purposes only to facilitate the understanding of the present invention, and should not be construed as limiting the scope of the invention. It should be understood that various changes and improvements may be made to the present invention without departing from the spirit and scope of the invention, and the present invention encompasses its equivalents. Moreover, the present invention may be considered as a device comprising the rotating mechanism of the present application for implementation.

In the embodiments of the present application, functionality that one component comprises may be distributed over a plurality of components, and functionality the a plurality of components comprise may be integrated into one component. Also, at least part of the configuration of the embodiments of the present application may be replaced with a configuration comprising similar functionality.

### Industrial Applicability

It may be utilized when it is desired to maintain the attitude of a load horizontally such as in transporting luggage by a drone, photographing by a camera, and/or carrying a measurement instrument such as a sensor or the like. In particular, when assuming the rotating body as an observation device composed of a plurality of cameras and/or sensors such as stereo cameras and the like, the positional change of a rotating body caused by an attitude change of an airframe may be reduced, and therefore, shaking of the observation device caused by the attitude change of the airframe due to a significant airframe movement may be mitigated, and shaking of the observation result such as a video footage may be reduced. Since it is difficult to correct pantoscopic footages after they are obtained, utilization of the present invention is effective.

When utilizing sending such as 3D mapping, since it will not be necessary to perform the correction of sending position by considering an inclination and/or a positional change of a measurement instrument due to an airframe inclination, simplification of the computational processing and error reduction will be possible.

### Description of the Reference Numbers

0. Center of rotation 0
1. Link X
2. Link A
3. Link B
4. Link C
5. Link D
6. Link Y
10. Joint XA
11. Joint XC
12. Joint XB
13. Joint BC
14. Joint AD
15. Joint BY
16. Joint DY
17. Joint CD
30. Arm
31. Actuator
32. Driving link
33. Rotating mechanism
50. Attitude control system
51. Flight controller
52. Receiver
53. Motor and propellers
54. Attitude calculation means
55. Controlling computer
56. Driving actuator
57. Attitude calculation means
100. Flying body
101. Load
300. Link Y of first rotating mechanism connecting second rotating mechanism
301. Second link X
302. Second link A
303. Second link B
304. Second link C
305. Second link D
306. Second link Y
310. Second joint XA
311. Second joint XC
312. Second joint AB
313. Second joint BC
314. Second joint AD
315. Second joint BY
316. Second joint DY
317. Second joint CD
400. Link Y of third rotating mechanism
501. Link X of first rotating mechanism and first rotating mechanism
502. Third link A
505. Third link D
510. Third joint XA
514. Third joint AD
516. Third joint DY
601. Bearing or motor
602. Connection member to rotating frame
701. Link X
702. Link Au
703. Link Ad
704. Link B
705. Link Cu
706. Link Cd
707. Link D
708. Link E
709. Link Y
710. Joint XAuz
711. Joint XCuz
712. Joint XEz
713. Joint AuBz
714. Joint BCuz
715. Joint BEz
716. Joint AdBz
717. Joint BCdz
718. Joint AdDz
719. Joint BYz
720. Joint DYz
721. Joint CdDz
722. Center of rotation 0z
723. Joint DEz
810. Joint XAux
811. Joint XCux
812. Joint XEx
813. Joint AuBx
814. Joint BCux
815. Joint BEx
816. Joint AdBx
817. Joint BCdx
818. Joint AdDx
819. Joint BYx
820. Joint DYx
821. Joint CdDx
822. Center of rotation 0x
823. Joint DEx
1500. Counterweight
1501. Rotation axis
1502. Rotation axis
1600. Link
1601. Joint
1700. Connection
1701. Screw
1801. Gripper, device for grasping
1802. Object for grasping
1810. String, wire, or the like
1811. Connection point, unreeling point
1820. Running device
1830. Pedestal, plate
1831. Transported object
2200. Center of rotation or center of mass of flying body

## Claims

1. A rotating mechanism with joints arranged so that:
a link X and a link A are connected by a joint XA;
a link A and a link B are connected by a joint AB;
a link B and a link Y are connected by a joint BY;
a link C is connected by a joint XC on the link X and a joint BC on the link B; and
a link D is connected by a joint AD on the link A and a joint DY on the link Y,
wherein, when viewed on a plane,
a line connecting the joints XA and XC, and a line connecting the joints AB and BC are parallel;
a line connecting the joints AB and AD, and a line connecting the joints BY and DY are parallel;
a line connecting the joints XA and AB, and a line connecting the joints XC and BC are parallel; and
a line connecting the joints AB and BY, and a line connecting the joints AD and DY are parallel,
wherein the link X is connected to a rotation reference, or the link X is the rotation reference,
the link Y is connected to a rotating body, or the link Y is the rotating body, and
wherein the rotating body and the rotation reference may be assigned vice versa.

2. The rotating mechanism of Claim 1, wherein relative to the rotation reference, the rotating body is rotatable about at least one more axis other than a rotation axis by the rotating mechanism.

3. The rotating mechanism of Claim 1, comprising a first rotating mechanism and a second rotating mechanism according to Claim 1,
wherein the link Y of the first rotating mechanism is connected to the link X of the second rotating mechanism, or the link Y of the first rotating mechanism is the link X of the second rotating mechanism, and
wherein the link Y of the second rotating mechanism is connected to a rotating body, or the link Y is the rotating body.

4. The rotating mechanism of Claim 3, wherein
a rotation axis of the link Y of the first rotating mechanism relative to the link X of the first rotating mechanism, and a rotation axis of the link Y of the second rotating mechanism relative to the link X of the second rotating mechanism cross.

5. A rotating mechanism, wherein
a link X and a link Au are connected by a joint XAu;
the link X and a link Cu are connected by a joint XCu;
the link X and a link E are connected by a joint XE;
a link B and the link Au are connected by a joint AuB;
the link B and the link Cu are connected by a joint BCu;
the link B and the link E are connected by a joint BE;
the link B and a link Ad are connected by a joint AdB;
the link B and a link Cd are connected by a joint BCd;
the link B and a link Y are connected by a joint BY;
a link D and the link Ad are connected by a joint AdD;
the link D and the link Cd are connected by a joint CdD; and
the link D and the link Y are connected by a joint DY,
wherein at least either pair of the link Au and the link Ad, or the link Cu and the link Cd are connected so that they rotate a same amount relative to the link B,
wherein each of the joints rotatably connects a corresponding connected link in at least two axial directions,
wherein when viewed on a plane in which the axes of the two rotation axis directions of each joint orthogonally cross,
a line connecting the joint XAu and the joint AuB, a line connecting the joint XCu and the joint BCu, and a line connecting the joint XE and the joint BE are parallel, and distances between the corresponding joints are the same,
wherein a line connecting the joint AdB and the joint AdD, a line connecting the joint BCd and the joint CdD, and a line connecting the joint BY and the joint DY are parallel, and distances between the corresponding joints are the same,
wherein the link X is connected to a rotation reference, or the link X is the rotation reference, and
the link Y is connected to a rotating body, or the link Y is the rotating body.

6. A rotating mechanism with joints arranged so that:
a link X and a link A are connected by a joint XA;
the link A and a link B are connected by a joint AB;
the link B and a link Y are connected by a joint BY; and
a link C is connected by a joint XC on the link X and a joint BC on the link B,
wherein when the joints are viewed on a plane perpendicular to the rotation axes of the joints,
a line connecting the joints XA and XC, and a line connecting the joints AB and BC are parallel; and
a line connecting the joints XA and AB, and a line connecting the joints XC and BC are parallel,
wherein the link X is connected to a rotation reference, or the link X is the rotation reference, and
wherein the link Y is connected to a rotating body, or the link Y is the rotating body.

7. The rotating mechanism of Claim 6, wherein
at least one of the link A and the link C may be constructed with a material at least in part flexible, and the joint or joints connected with the flexible material may be eliminated.

8. The rotating mechanism of any of Claim 1 though Claim 5 with the link D eliminated, wherein
at least one of the joint or joints connected to the link D may be also eliminated, and
at least one of the link A, the link C, and the link E may be constructed with a material at least in part flexible.

9. The rotating mechanism of any of Claim 1 though Claim 8, wherein the rotating mechanism is provided with a counterweight on at least one of the links.

10. The rotating mechanism of any of Claim 1 though Claim 9, wherein the rotating mechanism drives the links so that the rotating body maintains a horizontal state, or a predetermined attitude relative to the horizontal state.

11. The rotating mechanism of any of Claim 1 though Claim 10, wherein the rotating body is a measurement instrument.

12. The rotating mechanism of any of Claim 1 though Claim 11, wherein the rotation reference is a flying body.

13. A device provided with the rotating mechanism of any one of Claim 1 through Claims 9, wherein
the rotation reference is a flying body, and the rotating body is a wire, a rope, a string, or a similar object, and
the device is provided with a winch for reeling the rotating body.
